# FASCICULE DE BREVET EUROPEEN

(11) **EP 1 032 163 B1**
(45) Date de publication et mention de la délivrance du brevet: **14.04.2004**
(21) Numéro de dépôt: 00400385.1
(22) Date de dépôt: 10.02.2000
(51) Int. Cl.: H04L 12/46, H04L 12/26

(54) **Dispositif pour introduire une machine supplémentaire dans un réseau de machines adressables, sans modifier les tables d'adressage du réseau**
Vorrichtung zum Einfügen einer zusätzlichen Maschine in einem Netzwerk adressierbarer Maschinen ohne dabei die Adressierungstabellen des Netzwerkes zu verändern
Device for introducing a supplementary machine into a network of addressable machines without modifying the address tables of the network

(30) Priorité: 22.02.1999 FR 9902182
(43) Date de publication de la demande: 30.08.2000
(73) Titulaire: ALCATEL, 75008 Paris (FR)
(72) Inventeur: Barbey, Jean-Pierre, 95800 Cergy (FR); Criqui, Jean-François, 92600 Asnieres (FR); Rousseau, Jean-René, 95000 Neuville S/Oise (FR)
(74) Mandataire: Fournier, Michel Robert Marie

(56) Documents cités:
- EP-A- 0 612 170

## Description

L'invention concerne un procédé pour introduire une machine dons un réseau de machines adressables, tel qu'un réseau de télécommunication, sons modifier les tables d'adressage du réseau, c'est à dire les tables permettant à chaque machine du réseau de router des messages vers leur destination. En effet, chaque machine est classiquement désignée par une adresse qui lui est propre et qui permet de la désigner comme destination d'un message. Cette adresse de destination est transportée par le message lui-même (par exemple dans un réseau utilisant le protocole Internet ou le protocole n°7). Dans tous les cas, choque machine du réseau exécute une procédure de routage utilisant une table de routage qui associe une route à chaque adresse de destination.

Aujourd'hui, l'introduction d'une machine supplémentaire dans un tel réseau nécessite :
- d'attribuer à cette machine une adresse qui n'est pas déjà utilisée dans ce réseau, et donc mettre à jour le plan d'adressage de ce réseau ;
- et d'indiquer éventuellement cette adresse à toutes les machines du réseau, pour modifier les tables de routage utilisées par ces machines.
Ces opérations alourdissent la gestion du réseau.

Le document **US 6.009.474** décrit un dispositif pour ré-attribuer des adresses, de type Internet, à des noeuds d'un réseau quand la topologie de ce réseau est modifiée, notamment lorsqu'une machine supplémentaire est introduite dans le réseau.
Le but de l'invention est de proposer un dispositif permettant d'éviter d'attribuer de nouvelles adresses lorsque l'on introduit une machine dans un tel réseau.

L'objet de l'invention est un dispositif pour introduire une machine supplémentaire dans un réseau de machines adressables, sans modifier les tables d'adressage du réseau, cette machine supplémentaire étant intercalée sur au moins une liaison préexistant entre deux machines déjà présentes dans ce réseau, et possédant ou moins deux ports reliés respectivement à des ports appartenant respectivement à ces deux machines ;
**caractérisé** en ce que :
- chaque port de la machine supplémentaire comporte des moyens pour mémoriser et reconnaître une adresse qui lui est propre et qui est constituée par l'adresse désignant une machine à laquelle cette machine supplémentaire est reliée mais qui n'est pas celle de la machine à laquelle ce port est relié ;
- et des moyens pour reconnaîtra un type particulier de message, ou un contenu particulier de message, afin de discriminer des messages qui sont destinés à cette machine supplémentaire, et des messages qui sont destinés à d'autres machines du réseau.

Le dispositif ainsi caractérisé permet à la machine supplémentaire de recevoir des messages alors que tout se passe, dans les machines auxquelles elle est reliée, comme si ces dernières envoyaient des messages vers une machine située au-delà de la machine supplémentaire. Pour les messages qui ne lui sont pas destinés, la machine supplémentaire est transparente, puisque les moyens pour reconnaître le type de chaque message reçu permettent de déterminer si le message est destiné à la machine supplémentaire, ou bien est réellement destiné à une autre machine.

L'invention sera mieux comprise et d'autres caractéristiques apparaîtront à l'aide de la description ci-dessous et des figures l'accompagnant :
- La figure 1 représente un exemple de réseau, avant l'insertion d'une machine supplémentaire.
- La figure 2 représente le réseau représenté sur la figure 1, après l'insertion d'une machine supplémentaire, selon l'Art Antérieur.
- La figure 3 représente le réseau représenté sur la figure 1, après l'insertion d'une machine supplémentaire, selon l'invention.

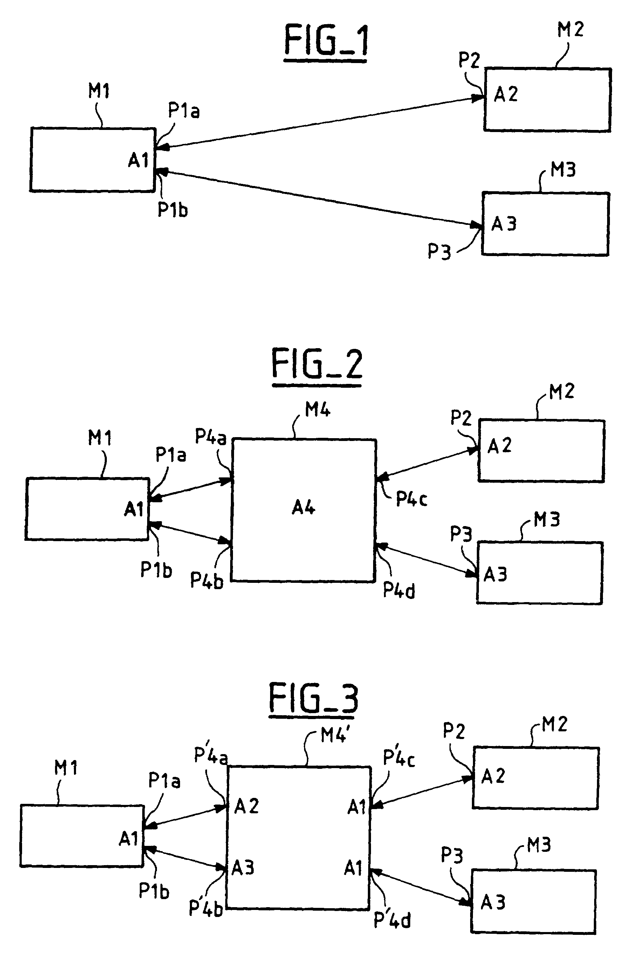

L'exemple de réseau représenté sur la **figure 1** comporte trois machines M1, M2, M3, la machine M1 ayant deux ports P1a et P1b, la machine M2 ayant un port P2, et la machine M3 ayant un port P3. Le port P1a est relié au port P2. La machine M2 envoie des messages à la machine M1 en la désignant par une adresse A1. La machine M1 envoie des messages à la machine M2 en la désignant par une adresse A2. La machine M3 envoie des messages à la machine M1 en la désignant par une adresse A1. La machine M1 envoie des messages à la machine M3 en la désignant par une adresse A3.

La **figure 2** représente le réseau représenté sur la figure 1, après l'insertion d'une machine supplémentaire, selon l'Art Antérieur. Elle possède quatre ports P4a, P4b, P4c, P4d, qui comportent chacun des moyens pour reconnaître une adresse A4 propre à la machine M4. Le port P4a est relié au port P1a. Le port P4b est relié au port P1b. Le port P4c est relié au port P2. Le port P4d est relié au port P3. Les tables de routages des machines M1, M2, M3 sont modifiées pour leur permettre d'envoyer des messages à la machine supplémentaire M4 en la désignant par l'adresse A4.

La **figure 3** représente le réseau représenté sur la figure 1, après l'insertion d'une machine supplémentaire, selon l'invention. La machine supplémentaire, M4', possède quatre ports P'4a, P'4b, P'4c, P'4d, P'4a. Le port P'4a est relié au port P1a. Le port P'4b est relié au port P1b. Le port P'4c est relié au port P2. Le port P'4d est relié au port P3.

Les ports P'4a, P'4b, P'4c, P'4d comportent chacun des moyens pour reconnaître respectivement les adresses A2, A3, A1, A1. Ainsi chaque port de la machine supplémentaire M4' reconnaît une adresse désignant une machine à laquelle cette machine supplémentaire est reliée mais qui n'est pas l'adresse de la machine à laquelle ce port est relié. Chaque port comporte en outre des moyens pour reconnaître un type particulier de message, ou un contenu particulier de message, afin de discriminer des messages qui sont destinés à la machine supplémentaire M4', et des messages qui sont destinés à une autre machine du réseau. Ces moyens peuvent être constitués d'un processeur.

Les tables de routages des machines M1, M2, M3 ne sont pas modifiées.

Par exemple, la machine M1 adresse des messages à la machine M2 en la désignant par son adresse A2. Ces messages sont envoyés à la machine M4'. Le port P'4a reconnaît l'adresse A2 qui lui est attribuée. La machine M4', intégrée au réseau, traite ces messages selon certains critères.

Par exemple, elle reçoit ce message et le retransmet à la machine M2, sauf si ce message est d'un type particulier prédéterminé, ou un contenu particulier prédéterminé, qui indique que ce message est destiné exclusivement à la machine M4. Dans ce dernier cas, le message est traité localement, par la machine M4'.

La machine M1 envoie des messages à la machine M3 en la désignant par son adresse A3. Le port P'4b reconnaît l'adresse A3 qui lui est attribuée. Par exemple, il reçoit ce message et le retransmet à la machine M3, sauf si ce message est d'un type particulier prédéterminé, qui est destiné exclusivement à la machine M4.

La machine M2 envoie des messages à la machine M1 en la désignant par son adresse A1. Le port P'4c reconnaît l'adresse A1 qui lui est attribuée. Par exemple, reçoit ce message et le retransmet à la machine M1, sauf si ce message est d'un type particulier prédéterminé, qui est destiné exclusivement à la machine M4.

La machine M1, par exemple, envoie des messages à la machine M4' en la désignant par l'adresse A2, ou par l'adresse A3, et en utilisant un type de message particulier reconnaissable par son type ou son contenu. Si c'est l'adresse A3 qui est utilisée, le port P'4b reconnaît l'adresse A3 qui lui est attribuée. Il reçoit ce message et , par exemple, il reconnaît le type ou le contenu particulier du message, qui indique qu'il est destiné exclusivement à la machine M4'. La machine le M4' traite alors localement.

La machine M4' peut aussi prendre l'initiative d'envoyer des messages aux autres machines M1, M2, M3 puisqu'elle connaît leurs adresses.

La machine M4' peut aussi surveiller tous les messages qui transitent par elle.

## Revendications

1. Dispositif pour introduire une machine supplémentaire (M4') dans un réseau de machines adressages (M1, M2, M3), sans modifier les tables d'adressage du réseau, cette machine supplémentaire (M4') étant intercalée sur au moins une liaison préexistant entre deux machines (M1, M2 ; M1, M3) déjà présentes dans ce réseau, et possédant au moins deux ports (P4a, P4b, P4c, P4d) reliés respectivement à des ports (P1a, P1b, P2a, P2b, P3a, P3b) appartenant respectivement à ces deux machines (M1, M2; M1, M3) ; **caractérisé en ce que** :
- chaque port (P4a, P4b, P4c, P4d) de la machine supplémentaire (M4') comporte des moyens pour mémoriser et reconnaître une adresse (A1, A2, A3) qui lui est propre et qui est constituée par l'adresse désignant une machine (M1, M2, M3) à laquelle cette machine supplémentaire (M4') est reliée mais qui n'est pas celle de la machine à laquelle ce port est relié;
- et des moyens pour reconnaître un type particulier de message, ou un contenu particulier de message, afin de discriminer des messages qui sont destinés à cette machine supplémentaire, et des messages qui sont destinés à d'autres machines du réseau.

## Claims

1. A system for inserting an additional machine (M4') into a network of addressable machines (M1, M2, M3) without modifying the addressing tables of the network, said additional machine being inserted on at least one pre-existing link between two machines (M1, M2; M1, M3) already present in this network, and having at least two ports (P4a, P4b, P4c, P4d) respectively connected to ports (P1a, P1b, P2a, P2b, P3a, P3b) belonging to these two machines (M1, M2; M1, M3) respectively; **characterized in that**:
- each port (P4a, P4b, P4c, P4d) of the additional machine (M4') includes means for memorizing and recognizing an address (A1, A2, A3) which is specific to it and which consists of the address designating a machine (M1, M2, M3) to which said additional machine (M4') is connected but which is not that of the machine to which that port is connected;
- and means for recognizing a particular type of message or a particular message content, in order to discriminate messages which are addressed to the additional machine from messages which are addressed to other machines in the network.

## Patentansprüche

1. Vorrichtung zum Einfügen einer zusätzlichen Maschine (M4') in ein Netzwerk adressierbarer Maschinen (M1, M2, M3), ohne dabei die Adressierungstabellen des Netzwerkes zu verändern, wobei diese zusätzliche Maschine (M4') in mindestens eine vorher bestehende Verbindung zwischen zwei bereits in diesem Netzwerk vorhandene Maschinen (M1, M2; M1, M3) eingefügt wird, und über mindestens zwei Ports (P4a, P4b, P4c, P4d) verfügt, die jeweils an Ports (P1a, P1b, P2a, P2b, P3a, P3b) dieser beiden Maschinen (M1, M2; M1, M3) angeschlossen sind, **dadurch gekennzeichnet, dass**:
- jeder Port (P4a, P4b, P4c, P4d) der zusätzlichen Maschine (M4') über Mittel zur Speicherung und Erkennung einer ihm eigenen Adresse (A1, A2, A3) verfügt, die aus der Adresse zur Bezeichnung einer Maschine (M1, M2, M3) besteht, mit der diese zusätzliche Maschine (M4') verbunden ist, aber nicht die Adresse der Maschine ist, an die dieser Port angeschlossen ist;
- sowie über Mittel zur Erkennung eines spezifischen Typs von Meldung oder eines spezifischen Inhalts einer Meldung, um Meldungen, die für diese zusätzliche Maschine bestimmt sind, von Meldungen zu unterscheiden, die für andere Maschinen des Netzwerkes bestimmt sind.
